# EUROPEAN PATENT SPECIFICATION

(11) **EP 0 365 026 B1**
(45) Date of publication and mention of the grant of the patent: **03.11.1993**
(21) Application number: 89119512.5
(22) Date of filing: 15.07.1986
(51) Int. Cl.: B21D 43/05

(54) **A feed bar driving apparatus for a transfer press**
Antriebsvorrichtung für eine Aufgabestange an einer Stufenpresse
Dispositif pour le mouvement d'une barre d'amenage dans une presse de transfert

(30) Priority: 31.07.1985 JP 169272/85; 25.02.1986 JP 26911/86 U
(43) Date of publication of application: 25.04.1990
(62) Divisional of application: 86109693.1
(73) Proprietor: Aida Engineering Ltd., Sagamihara-shi, Kanagawa-ken (JP)
(72) Inventor: Oba, Susumu, Sagamihara-shi Kanagawa-ken (JP); Kurishima, Kenji, Sagamihara-shi Kanagawa-ken (JP); Kusunoki, Masaharu, Sagamihara-shi Kanagawa-ken (JP); Odaka, Tadao, Sagamihara-shi Kanagawa-ken (JP); Arai, Toshihiko, Siroyama-machi Tsukui-gun (JP)
(74) Representative: Körner, Ekkehard, Dipl.-Ing.

(56) References cited:
- DE-A- 2 632 593
- DE-B- 2 334 722

## Description

The present invention relates to a feed bar driving apparatus for a transfer press, and more particularly to an apparatus for advancing and returning the feed bars, as set forth in the preamble of claim 1. Such apparatus is known from DE-A-2 613 269.

Heretofore, various kinds of devices have been developed for a transfer device for transferring workpieces to plural dies provided in a transfer press.

In a transfer device, a pair of feed bars are disposed along and on both sides of the dies and are provided with advancing and returning movements in which they repeat in advance, stop, return and stop motions in the longitudinal direction of the feed bar, as well as transverse unclamping and clamping movements in which they move away from and toward each other during the two stop periods, said pair of feed bars transferring the workpieces by holding them therebetween with pairs of fingers, the number of said pairs corresponding to the number of dies. The feed bars can also be given clamping/lifting and lowering/unclamping movements during the two stop periods in the longitudinal advancing and returning movements, as occasion demands.

One example of prior transfer device is described in aforementioned DE-A-2 613 269. In that document, a transfer press is disclosed comprising, in a planet gear mechanism having a sun gear and a planet gear in the gear ratio of 2 to 1, an arm which is kept rotatable and coaxially with the sun gear, a first eccentric pin which is provided on the planet gear, a groove which is formed radially in the art to be engaged with the first eccentric pin, and a second eccentric pin which is provided on the arm to be engaged with a groove in a slider.

The timing of transfer drive with respect to the crank angle in the transfer press is as follows: the feed bars advance workpieces and stop in the course of 120° extending from crank angle 300° and past top dead center 0° and to crank angle 60° , and then the workpieces remain at rest and are unclamped by the feed bars in the course of subsequent 60° , and the feed bars return and stop in the course of subsequent 120° with pressing operation having being performed, and then the feed bars clamp the workpieces in the course of subsequent 60° .

In the above-described prior art, the standard stop angle between ends of advance and return is 60° . Actually, the stop angle is available up to 70° , but in which case the feed bars make an imperfect stop and they displace or reciprocate somewhat in the advancing and returning directions during the stop periods. This displacement tends to be more noticeable the larger the stop angle becomes. Further, the prior art has a problem in that a large gear box is disposed below the ends of the feed bars, thereby restricting the space for providing chutes for taking workpieces into and out of the press.

In addition, the prior art has a problem in that the mechanism for adjusting the length of the advance and return stroke becomes complicated.

It is the object of the invention to provide a feed bar driving apparatus as set forth above which enables the feed bar stroke to be adjusted in an easy manner.

This object is attained by the features of claim 1. Preferred embodiments of the invention are subject matter of the dependent claims.

By the invention, by varying the fulcrum position of the pin extending in the longitudinal opening of the drive lever and/or by varying the eccentricity of the connecting pin with respect to the center of the pinion driving said drive lever, the effective arm lengths on either sides of the fulcrum pin are varied, resulting in a variation of the feed bar stroke without changing the stroke of the drive rack engaged by the pinion, which, in its broadest sense, forms part of the lever arm at the input side of the drive lever.
Fig. 1 is a schematic view of a press;
Fig . 2 to 5 show a mechanism for advancing and returning feed bars, and Fig. 2 is a side elevational view, part in section, of a press crown;
Fig. 3 is a sectional view taken on line III-III of Fig. 2;
Fig. 4 is a front view of parts incorporated in a press column;
Fig. 5 is a sectional view taken on line V - V of Fig. 4;
Fig. 6 is a locus graph showing the center of a pinion for moving a drive rack up and down and the center of an eccentric pin thereof;
Fig. 7 is a graph of stroke and crank angle showing the sliding movement of the press and the advancing and returning movements of the feed bars.
Figs. 8 and 9 show a second mechanism for advancing and returning the feed bars: Fig. 8 is a front view and Fig. 9 is a sectional view taken on line IX - IX of Fig. 8.

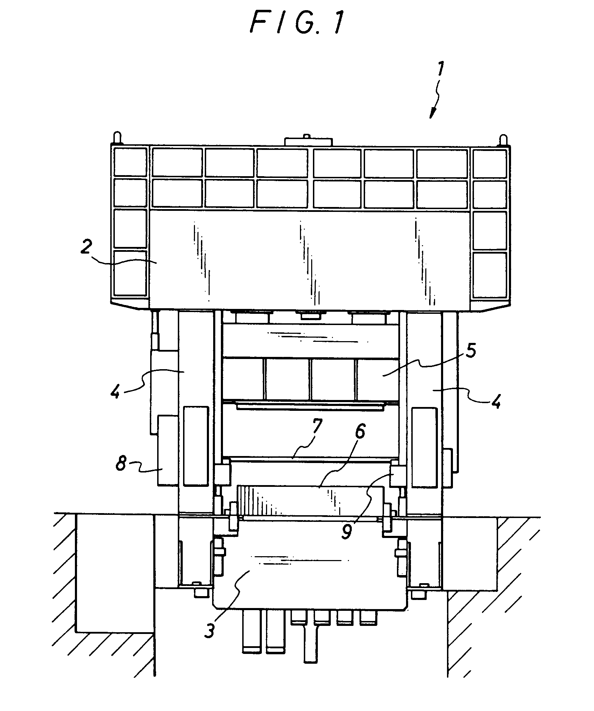

Fig. 1 is a schematic view of a press 1 having a crown 2 and a bed 3 joined together by columns 4, 4 inside which a press slide 5 is provided and is lifted and lowered with relative to a bolster 6 provided on the bed 3.

A pair of feed bars 7 are provided on both sides of plural dies, not shown, placed on the bolster 6, and the feed bar is connected at one end to a drive unit casing 8 where it receives advancing and returning movements and at the other end to a drive unit casing 9 where it receives clamping/unclamping and lifting/lowering movements.

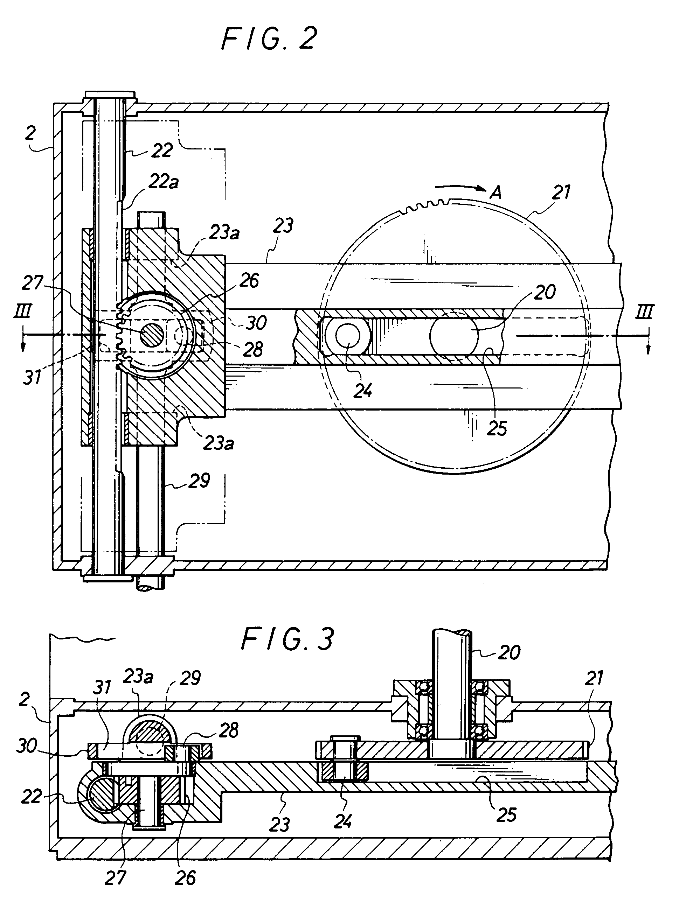

Figs. 2 to 5 show a mechanism by which the feed bar performs advancing and returning movements.

In Figs. 2 and 3, a press crankshaft 20 has a main gear 21 fixed on the end thereof, and guide racks 22 (the guide rack on the opposite side being omitted herein) are vertically provided at ends of the crown 2 in the forward/rearward direction of the press so that they are disposed with the main gear 21 therebetween and symmetrically with respect to a vertical line passing through the center of the crankshaft, and an upper slider 23 is vertically slidably provided on the guide rack 22.

The guide rack 22 is in the form of a column and is provided with teeth 22a toward the center of the press. On the side surface of the main gear 21 opposite to the upper slider 23 an eccentric pin 24 is provided, and a longitudinal groove 25 is formed in the upper slider 23 in the forward/rearward direction of the press so as to slidably engage with the eccentric pin 24. As the main gear 21 rotates in the direction A as indicated by the arrow in Fig. 2, the upper slider 23 moves up and down from the position shown in the drawing to positions indicated by a dot-and-dash line.

A pinion 26 is rotatably mounted on the upper slider 23 by a supporting pin 27 and meshes with the teeth 22a of the guide rack 22. Affixed to the side of the pinion 26 is an eccentric pin 28 which has a required eccentricity and is eccentric for a half of pitch circle of the pinion 26 in this embodiment. The upper slider 23 is provided with a drive rack 29 which is parallel to the guide rack 22 and extends downwardly through the bottom wall of the crown 2, and the upper part of the drive rack 29 is slidably supported by bosses 23a, provided on the slider 23. The drive rack 29 between the bosses 23a has a larger diameter in mid portion, where a cross member 30 is integrally provided thereon and is formed with a lateral groove 31 for slidable engagement with the eccentric pin 28 of the pinion 26.

The pinion 26 meshes with the teeth 22a of the guide rack 22 and is arranged to rotate 180° + ϑ while the upper slider 23 travels from the middle position to the upper and lower limits. The eccentricity of the eccentric pin 24 of the main gear 21 being adjustable (not shown), ϑ becomes large with increase of pin eccentricity, in which case the stroke of the upper slider increases, and on the other hand ϑ becomes small with decrease of pin eccentricity.

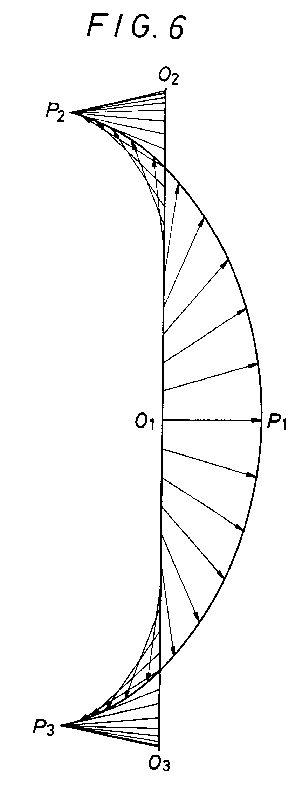

In Fig. 6, the center O₁ of the pinion 26 moves up and down between the upper limit O₂ with the slider 23 at its top and the lower limit O₃ with the slider 23 at its bottom. The displacement of O₁ is the product of eccentricity e of the eccentric pin 24 of the main gear 21 and sine element of the rotational angle of the crankshaft 20 (referred to as crank angle of the press). P₁ is the center of the eccentric pin 28, and with the vertical displacement and the following rotation of the pinion 26, the direction of O1P1 gradually changes. As shown, upper and lower limits P₂ and P₃ which are the locus of P₁ make substantially no vertical displacement (a little motion is seen but the quantity thereof is very small) in the course of angle ϑ before and after the pinion 26 rotates 180°, namely in the course of 2ϑ in total. This angle 2ϑ is adjustable as described above, and it is easy to set 70° angle as standard.

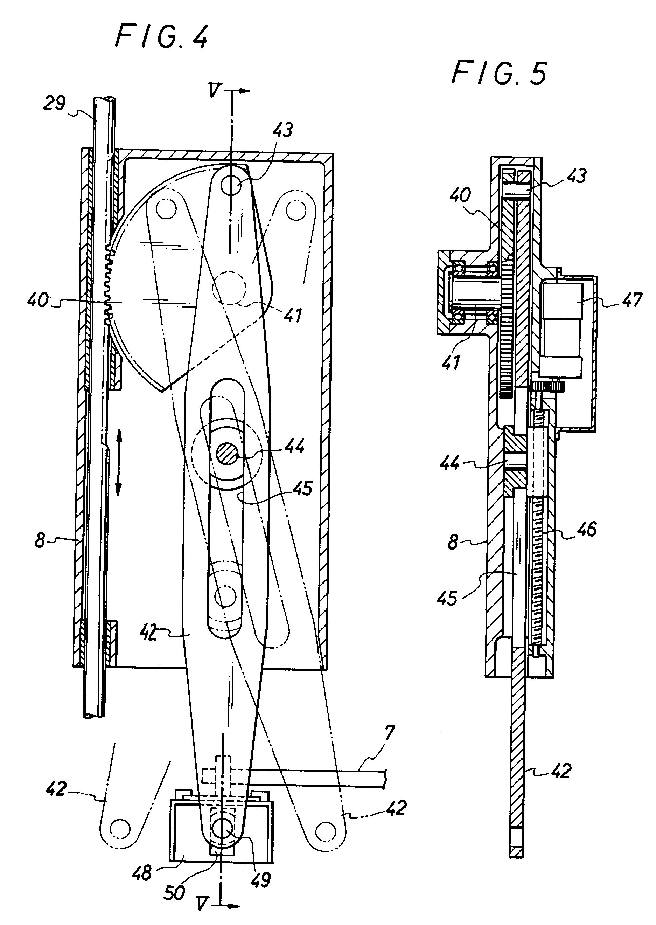

In Figs. 4 and 5, the lower part of the drive rack 29 is guided in a vertically movable manner in the drive unit casing 8 which is provided inside each column at the front and rear of the press.

Inside the drive unit casing 8 is a sector gear or pinion 40 rotatably provided by a supporting axis 41 and meshing with the drive rack 29, and a drive lever 42 is connected to a peripheral part of the sector gear 40 by a pin 43. The drive lever 42 protrudes from the bottom of the casing 8 and is slidably supported by a flucrum pin 44 inside the casing 8. The fulcrum pin 44 is slidably engaged by a longitudinal opening 45 of the drive lever 42 and is coupled to an adjusting screw 46 at the rear of the drive lever 42. The adjusting screw 46 is rotatably driven by a stepping motor 47 with an encoder provided in the casing 8, so as to adjust the position of said fulcrum pin 44.

Further, the lower end of the drive lever 42 is connected to a horizontally reciprocating lower slider 48. A pin 49 which connects the lower slider 48 to the drive lever 42 is slidably provided in a longitudinal opening 50 of the slider 48 and regulates the swinging motion of the drive lever 42 into the longitudinal direction. The slider 48 is connected to the pair of feed bars 7.

The swinging motion of the drive lever 42 reciprocates the lower slider 48, thereby causing the feed bars 7 to perform the longitudinal movements, namely advancing and returning movements.

By changing the position of the fulcrum pin 44, the length of the feed bar stroke can be changed. By rotating the adjusting screw 46 by the stepping motor 47, the position of the fulcrum pin 44 in the longitudinal opening 45 of the drive lever 42 can be changed in vertical direction. In the condition as shown, the feed bars 7 have the longest feed stroke. If the fulcrum pin 44 is moved down from this position, the feed bar stroke becomes shorter.

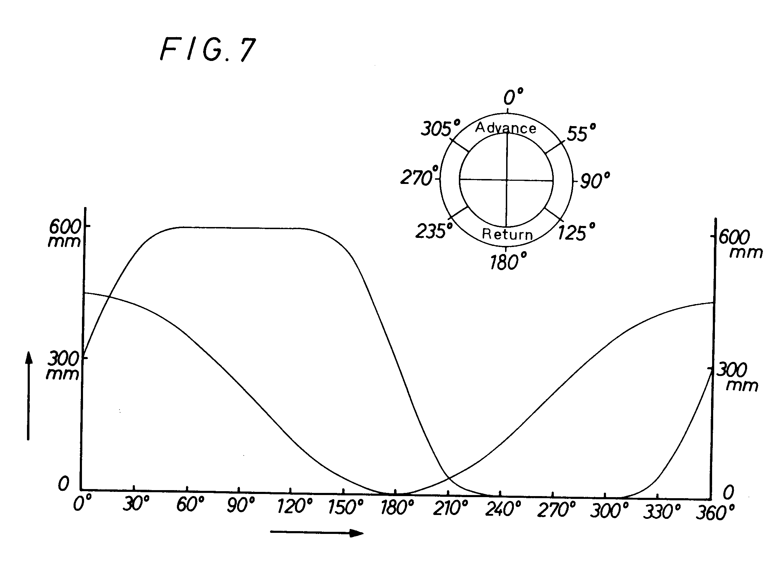

Fig. 7 shows the advancing and returning movements of the feed bars 7 and the lifting and lowering movements of the press slide, in comparison to crank angle of the press. The feed bars 7 advance with the press at crank angle 305° to 55°, return with the press at crank angle 125° to 235°, and stop while the crank is in the course of 70° (stop angle) with the press at crank angle 55° to 125° and 235° to 305°. The stop angle 70° is standard and is easily changeable by changing the eccentricity of the eccentric pin 24 of the main gear 21, and with this stop angle, the feed bars stop stably.

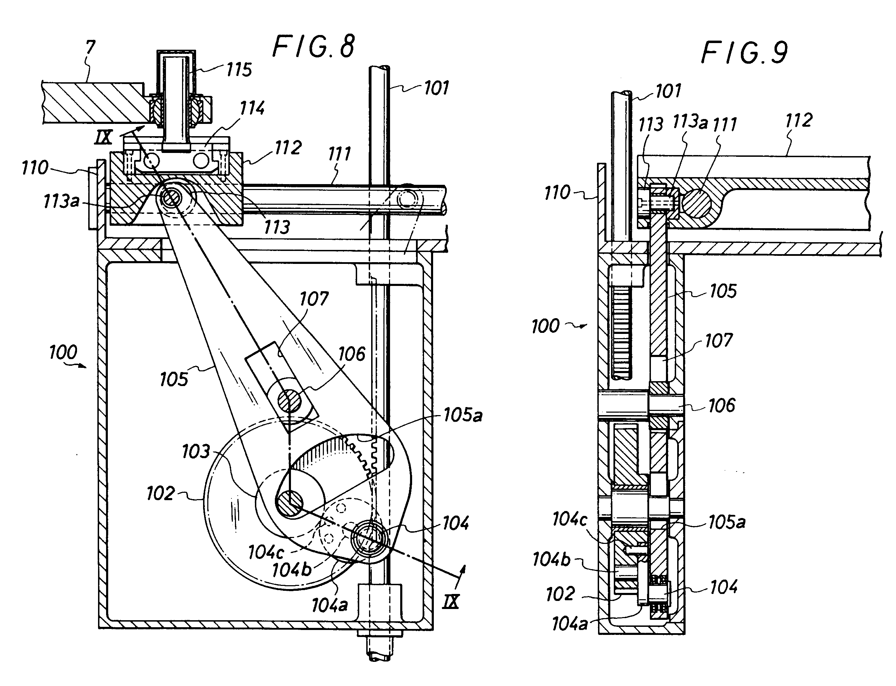

Figs. 8 and 9 show a second embodiment of the apparatus for advancing and returning the feed bars.

In a drive unit casing 100, a drive rack 101 meshes with a drive pinion 102 and the drive pinion 102 is rotatably provided by a supporting axis 103, and a connecting pin 104 provided in an eccentric part of the drive pinion 102 is connected to a lower end of a drive lever 105. A fulcrum pin 106 is provided in the casing 100 above the drive pinion 102 and is slidably engaged with a longitudinal opening 107 formed in the drive lever 105. With the up-and-down movements of the drive rack 101, the drive pinion 102 causes the connecting pin 104 to turn equiangularly about the center of the axis of the drive pinion 102, whereby the drive lever 105 swings from side to side in Fig. 8 around the fulcrum pin 106 while sliding by means of the longitudinal opening 107, and the upper end of the drive lever 105 moves from side to side almost in the horizontal direction around the fulcrum pin 106. This is enabled by proper selection of the ratio of the eccentricity of the connecting pin 104 on the drive pinion 102 to the length of the drive lever 105.

In a casing 110 fixed on the upper surface of the unit casing 100, two guide rods 111 are provided in the side-to-side direction in Fig. 8, namely in the longitudinal and advancing/returning direction of the feed bar 7, and a lower slider 112 is provided in the unit casing 100 and reciprocates, being guided by the guide rods 111. A pivot 113 is provided rotatably at the position of the lower slider 112 corresponding to the drive lever 105 and is connected at an eccentric part 113a thereof to the upper end of the drive lever 105. Consequently, the small vertical component of movement of the upper end of the drive lever 105 occurring when the drive lever 105 swings, with its upper end swinging predominantly in the horizontal direction, is taken up by a small rotation of the pivot 113, whereby the lower slider 112 makes an extremely smooth movement.

Slidable receptacles 114 are provided on the lower slider 112 in the horizontal direction perpendicular to the guide rods 111. Each of the receptacles 114 has a pin 115 thereon and the pair of feed bars 7 are removably connected to the pins 115, respectively.

The drive lever 105 is formed with an opening 105a therein for keeping its swinging motion free from interference by the axis of the drive pinion 102. In addition, the connecting pin 104 is provided on a disc 104a which is rotatably adjustably attached to the drive pinion 102. The disc 104a is mounted on the drive pinion 102 by a mounting pin 104b and a location pin 104c. The latter may be pulled out to rotate the disc 104a to some extent and then re-inserted so as to adjust the eccentricity of the connecting pin 104 and incline the equiangular swinging motion of the drive lever 105 to right or left to some extent, thereby effecting displacement to right or left of the area of the feed bar stroke.

Further, the length of the feed bar stroke can be adjusted by changing the mounting position of the fulcrum pin 106.

## Claims

1. A feed bar driving apparatus for a transfer press (1) for advancing and returning a feed bar (7) in the longitudinal direction thereof, said feed bar (7) being connected to a lower slider (48;112) slidably supported in a bed (3) of said press (1) and being operatively connected to the drive (20) of said press (1) so as to be driven in synchronism with the operation of said press (1), said connection comprising gears (21,26,40;102) and eccentric pins (24,28,43;104) affixed to said gears (21,26,40;102),
characterized by:
a drive rack (29;101) reciprocatingly driven by the press drive (20) in synchronism with the operation of said press (1) and vertically slidably extending into a unit casing (8;100) affixed to the bed (3) of said press (1), a pinion (40;102) rotatably mounted in said unit casing (8;100) and having an eccentric connecting pin (43;104) affixed thereto, said connecting pin (43;104) being connected to one end of a drive lever (42;105) the other end of which is connected to said lower slider (48;112), and a fulcrum pin (44;106) extending in a longitudinal opening (45;107) formed in said drive lever (42;105), wherein to vary the stroke of the feed bar (7) driven by said drive lever (42;105) at least one of the following positions is adjustable:
the position of said fulcrum pin (44;106) within said opening (45;107) is adjustable in the longitudinal direction of said opening (45;107)
and
the eccentric position of the connecting pin (104) with respect to the center of said pinion (102) is adjustable by an adjustable mounting of said connecting pin (104) to said pinion (102).

2. A driving apparatus as set forth in claim 1, wherein said connecting pin (104) is provided on a disk (104a) in an eccentric portion thereof, the mounting axis (104b) of which is eccentrically provided on said pinion (102), the eccentricity of said connecting pin (104) with respect to the axis (103) of said pinion (102) being adjustble by pulling out a location pin (104c) to render the disk (104a) rotatable on said pinion (102) and then reinserting said location pin (104c) to fix a selected rotational position of said disk (104a) on said pinion (102).

3. A driving apparatus as set forth in claim 1 or 2, wherein said fulcrum pin (44) is supported and adjustable by an adjusting screw (46) extending essentially parallely to the longitudinal direction of said drive lever (42) and being rotationally driven by a moror (47).

4. A driving apparatus as claimed in claim 3, wherein said motor (47) is a step motor with an encoder.

## Patentansprüche

1. Antriebsvorrichtung für eine Aufgabestange für eineStufenpresse (1) zum Vorschieben und Zurückziehen einer Aufgabestange (7) in deren Längsrichtung, wobei die Aufgabestange (7) mit einem unteren Gleitstück (48;112) verbunden ist, das verschiebbar in einem Bett der Presse (1) gelagert ist, und wirkungsmäßig mit dem Antrieb (20) der Presse (1) verbunden ist, um synchron mit dem Betrieb der Presse (1) angetrieben zu werden, wobei die Verbindung Zahnräder (21,26,40;102) und exzentrische Stifte (24,28,43;104) umfaßt, die an den Zahnrädern (21,26,40;102) befestigt sind,
**gekennzeichnet durch:**
eine Antriebsstange (29;101), die vom Pressenantrieb (20) synchron zum Betrieb der Presse (1) vor und zurück angetrieben ist und sich vertikal verschiebbar in einen Getriebekasten (8;100) erstreckt, der am Bett (3) der Presse (1) befestigt ist, ein Zahnrad (40;102), das drehbar in dem Getriebekasten (8;100) gelagert ist und einen an ihm befestigten exzentrischen Verbindungsstift (43;104) aufweist, der mit dem einen Ende eines Antriebshebels (42;105) verbunden ist, dessen anderes Ende mit dem unteren Gleitstück (48;112) verbunden ist, und einen Schwenklagerstift (44;106), der sich in einer in dem Antriebshebel (42;105) ausgebildeten Längsöffnung (45;107) erstreckt, wobei zur Veränderung des Hubes der von dem Antriebshebel (42;105) angetriebenen Aufgabestange (7) wenigstens eine der folgenden Positionen einstellbar ist:
die Position des Schwenklagerstiftes (44;106) ist innerhalb der Öffnung (45;107) in deren Längsrichtung verstellbar,
und
die Exzenterposition des Verbindungsstiftes (104) gegenüber dem Zentrum des Zahnrades (102) ist durch eine verstellbare Montage des Verbindungsstiftes (104) an dem Zahnrad (102) verstellbar.

2. Antriebsvorrichtung nach Anspruch 1, bei der der Verbindungsstift (104) auf einer Scheibe (104a) in einem exzentrischen Abschnitt derselben angeordnet ist, die Montageachse (104) der Scheibe exzentrisch an dem Zahnrad (102) angeordnet ist und die Exzentrizität des Verbindungsstiftes (104) gegenüber der Achse (103) des Zahnrades (102) durch Herausziehen eines Feststellstiftes (104) zum Drehbarmachen der Scheibe (104a) an dem Zahnrad (102) und anschließendes Wiedereinsetzen des Feststellstiftes (104c) zum Fixieren einer ausgewählten Drehstellung der Scheibe (104a) an dem Zahnrad (102) einstellbar ist.

3. Antriebsvorrichtung nach Anspruch 1 oder 2, bei der der Schwenklagerstift (104) durch eine Einstellschraube (46) gehalten und einstellbar ist, die sich im wesentlichen parallel zur Längsrichtung des Antriebshebels (42) erstreckt und von einem Motor (47) drehangetrieben ist.

4. Antriebsvorrichtung nach Anspruch 3, bei der der Motor (47) ein Schrittmotor mit einem Kodierer ist.

## Revendications

1. Un dispositif d'entraînement d'une barre d'amenage pour une presse transfert (1), pour faire avancer et reculer une barre d'amenage (7) dans la direction longitudinale de celle-ci, ladite barre d'amenage étant reliée à un coulisseau inférieur (48 ; 112) supporté de manière coulissante dans une table (3) de ladite presse (1) et étant relié de manière opérative à l'entraînement (20) de ladite presse (1) de manière à être entraîné en synchronisme avec le fonctionnement de ladite presse (1), ladite connexion comportant des pignons (21,26,40 ; 102) et des broches excentrées (24, 28, 43 ; 104) fixées audit pignon (21, 26, 40 ; 102),
caractérisé par :
une crémaillère d'entraînement (29; 101) entraînée de manière alternative par ledit entraînement de presse (20) en synchronisme avec le fonctionnement de ladite presse (1) et s'étendant de manière coulissante verticalement dans une enveloppe (8 ; 100) fixée à la table (3) de ladite presse (1), un pignon (40 ; 102) monté de manière tournante dans ladite enveloppe (8 ; 100) et présentant une broche de liaison excentrée (43 ; 104) fixée à celui-ci, ladite broche de liaison (43 ; 104) étant reliée à une extrémité d'un levier d'entraînement (42 ; 105) dont l'autre extrémité est reliée audit coulisseau inférieur (48 ; 112), et une broche de pivotement (44; 106) s'étendant dans une ouverture longitudinale (45 ; 107) formée dans ledit levier d'entraînement (42 ; 105), et, pour faire varier la course de la barre d'amenage (7) entraînée par ledit levier d'entraînement (42; 105), au moins l'une des positions suivantes est réglable :
la position de ladite broche de pivotement (44 ; 106) à l'intérieur de ladite ouverture (45 ; 107) est réglable dans la direction longitudinale de ladite ouverture (45 ; 107)
et
la position excentrée de ladite broche de liaison (104) par rapport au centre dudit pignon (102) est réglable par un montage réglable de ladite broche de liaison (104) sur ledit pignon (102).

2. Un dispositif d'entraînement tel qu'indiqué dans la revendication 1, dans lequel ladite broche de liaison (104) est prévue sur un disque (104a), dans une partie excentrée de celui-ci, dont l'axe de montage (104b) est prévu de manière excentrée sur ledit pignon (102), l'excentricité de ladite broche de liaison (104) par rapport à l'axe (103) dudit pignon (102) étant réglable en enlevant par traction une broche de positionnement (104c) pour rendre le disque (104a) tournant sur ledit pignon (102), puis en introduisant à nouveau ladite broche de positionnement (104c) pour fixer une position angulaire sélectionnée dudit disque (104a) sur ledit pignon (102).

3. Un dispositif d'entraînement tel qu'indiqué dans la revendication 1 ou 2, dans lequel ladite broche de pivotement (104) est supportée et réglable par une vis de réglage (46) s'étendant essentiellement parallèlement à la direction longitudinale dudit levier d'entraînement (42) et pouvant être entraînée en rotation par un moteur (47).

4. Un dispositif d'entraînement tel que revendiqué dans la revendication 3, dans lequel ledit moteur (47) est un moteur pas à pas avec un codeur.
